(19) Europäisches Patentamt
European Patent Office
Office européen des brevets

(11) **EP 4 369 308 A1**

(12) **EUROPEAN PATENT APPLICATION**

(43) Date of publication:
**15.05.2024 Bulletin 2024/20**

(21) Application number: **22212945.4**

(22) Date of filing: **12.12.2022**

(51) International Patent Classification (IPC):
**G06V 10/24** (2022.01)        **G06V 20/17** (2022.01)
**G06V 20/60** (2022.01)

(52) Cooperative Patent Classification (CPC):
**G06V 10/245; G06V 20/17; G06V 20/60**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.11.2022 PT 2022118328**

(71) Applicants:
• **INESC TEC - Instituto de Engenharia de Sistemas
e
Computadores, Tecnologia e Ciência
4200-465 Porto (PT)**

• **Universidade Do Porto
4099-002 Porto (PT)**

(72) Inventors:
• **MARQUES CLARO, RAFAEL
4200-465 Porto (PT)**
• **BRANDÃO DA SILVA, DIOGO ALEXANDRE
4200-465 Porto (PT)**
• **GOMES PINTO, ANDRY MAYKOL
4200-465 Porto (PT)**

(74) Representative: **do Nascimento Gomes, Rui
J. Pereira da Cruz, S.A.
Rua Victor Cordon, 10-A
1249-103 Lisboa (PT)**

(54) **A MULTIMODAL FIDUCIAL MARKER, A HETEROGENEOUS PERCEPTION APPARATUS AND
A MULTIMODAL SYSTEM COMPRISING BOTH**

(57) The present application relates to a multimodal system for a vehicle to accurately detect and navigate to a target location. The system comprises at least one multimodal fiducial marker (4) and a heterogeneous perception apparatus (8), to be coupled to an unmanned or manned vehicle (9). The marker (4), can be detected through the analysis of visual, thermal and point cloud data. The heterogeneous perception apparatus (8) collects both photometric and radiometric data, resorting to cameras and range sensors. This multimodal system improves the situational awareness of the vehicle (9), increasing its detection capabilities and navigational abilities. Consequently, the system (4, 8) provides the vehicle (9) with the ability to operate under server environment conditions, by means of a multimodal approach in order to perform a robust, redundant and reliable detection of the vehicle's target location (10).

Figure 3

**Description**

**FIELD OF THE APPLICATION**

The present application relates generally to detection systems and methods. More particularly, the present application relates to systems, methods and devices for aid unmanned or manned vehicles in detecting target locations.

**PRIOR ART**

Unmanned vehicles are autonomous robots that have been used in several applications due to the ability to maintain a very stable navigation, and to approach not easily access areas, resulting in the collection of high-quality data. Said vehicles may be of an aquatic, ground-based or air-based type and its main application areas include several industries, like the cinematographic, military, agricultural and surveillance. Furthermore, several inspection tasks are being carried out by said robotic vehicles, representing a reduction of the costs and of the total time consumed. The usual cycle of a robotic vehicle mission includes its departure from a base station, the execution of its task, and the returning to the base station or another target location.

An important feature that allows the autonomous operation is the capability of the vehicle to precise landing/docking on a predefined target location. A crucial task for enabling the vehicle to successfully land/dock on the desired target location is its ability to autonomously detect and recognize said target location in real-time. If the vehicle misses the target location, it can compromise the continuity of the mission, as well as damaging the vehicle equipment.

In case of aerial unmanned vehicles, such as drones, the landing accuracy of 1-3 m of the traditional GPS-based method does not satisfy the high precision needed for several applications, that require a centimeter level accuracy. Moreover, the performance of traditional visual approaches does not feature the required robustness and precision to operate in challenging weather and lighting conditions. And in the most extreme scenarios, these difficulties are equally felt by manned vehicles.

To achieve a precise docking/landing of an unmanned or manned vehicle, it is necessary to accurately retrieve the relative pose between the vehicle and the detected target location. Several robotic applications resort to artificial markers to label positions of interest and to help an unmanned vehicle or an automatic manoeuvre module of a manned vehicle to retrieve its relative position. The most common types of artificial markers used include visual markers, infrared (IR) beacons, thermal markers and retroreflective markers. But, independently of the type of markers and of the sensors used, the relative pose estimation requires the awareness of the pose of the markers in a fixed coordinate frame. Usually, the knowledge of the real size of the marker is also necessary for the scale factor. With this information, combined with the correct association between the detected marker and its real pose, it is possible to estimate the relative distance from the vehicle to the target location.

When a calibrated camera sensor is used, the task of calculating its position from a marker (3D reference points) and its projection toward the image plane (2D projection points) is known as the Perspective-n-Point (PnP) problem. There are different solutions able to solve this problem and whose performance depends on the type of markers used. Each of these methods allows to estimate the transformation from the camera to the marker frames. The pose of the vehicle is then calculated by knowing the transformation from the camera to the vehicle frames, and from the marker to the target location frames. Unlike when using a camera sensor, the use of a range sensor, such as 3D LiDAR (Light Detection And Ranging), can directly perceive the depth of the surrounding environment. This characteristic enables to easily calculate the relative pose between the vehicle and a marker, that can be detected by analysing the LiDAR's point cloud.

Many systems resort to visual information to identify visual markers for a multiplicity of tasks, including for docking/landing areas detection. Several studies have been performed in the area of computer vision, which are able to increase the docking/landing accuracy. The most common approaches use monochromatic markers placed on the docking/landing target. Each marker presents a layout that encodes a unique identification by a binary code. They are generally based on regular geometric shapes (such as squares), making any of them distinguishable from any other marker. In robotics, some of the most popular fiducial markers are the ARTag, AprilTag and ArUco. The quadrangular shape of these markers allows to extract the camera pose from their four corners, as long as the camera is properly calibrated. In resume, these markers are detected by firstly extracting the edges of an image collected by a visual camera, followed by filtering the contours that make up a polygon with four vertices, and finally by extracting its respective binary code. Circular shaped markers, such as the CCTag and the STag, are also used in several robotics applications. Although there are optimization techniques to improve the detectability of these markers, their major drawback is that they are dependent on lighting and environment conditions, only performing efficiently indoors or in daylight with favourable weather.

Other type of markers used for the detection of target location areas consists in the utilization of Light-Emitting Diodes (LEDs). Therefore, the vehicle must be equipped with a sensor that is able to capture the light emitted by the LEDs. The most common approaches propose the use of a beacon with IR LEDs and with an IR camera for the target location detection. The major drawback of these IR marker approaches is that they are only suitable for indoor operations, given its sensibility to the sunlight. Other disadvantage is related with the short range of the beams and with the limitation of the operation range that the angle of radiation implies, given that the tilting of the camera produces high localization errors.

Consequently, conventional solutions consist of unimodal methods with reduced potential of generalization. These approaches are limited to controlled scenarios with favourable conditions.

## PROBLEM TO BE SOLVED

For a vehicle to operate autonomously and effectively, it is mandatory to endow them with precise target location abilities. The unmanned or manned vehicle has to be able to detect the target location and to perform the required manoeuvre to get there without compromising its own safety and the integrity of its surroundings.

However, current solutions do not present the required robustness and reliability for accurate detection and navigation to the target location in highly demanding scenarios, particularly due to its inadequacy to perform accordingly with challenging lighting and weather conditions, including day and night operations.

The present solution intended to innovatively overcome such issues.

## SUMMARY OF THE APPLICATION

It is therefore an object of the present application a multimodal system to aid unmanned or manned vehicles in accurately detect and navigate to target locations.

Such system therefore provides the ability to operate under severe environment and light conditions (such as at different heights, with intense sunlight, no-light or in dark environments; thus, it includes operations subject to rain and fog), by means of a multimodal approach that resorts to photometric and radiometric data, in order to perform a robust, redundant and reliable detection of the vehicle's target location.

For that purpose, the system includes at least one multimodal fiducial marker and a heterogeneous perception apparatus to be coupled to the vehicle. The multimodal fiducial marker can be detected and localized through the analysis of visual, thermal and point cloud data. This is an active marker that is able to improve the relative localization of vehicles, which is very relevant for navigational manoeuvres, especially in unmanned vehicles. The heterogeneous perception apparatus, in its turn, collects both photometric and radiometric data, resorting to cameras and range sensors. Data is fused and combined together by means of a particular method also described in the present application.

Thus, the multimodal system of the present application improves the situational awareness of the vehicles, increasing its detection capabilities and navigational abilities. In an advantageous configuration, the system is comprised by:

- at least one multimodal fiducial marker as described in the present application; each marker positioned at a target location; and
- at least one heterogeneous perception apparatus as described in the present application.

The multimodal fiducial marker of the present application is adapted to create an unique thermal retroreflective binary identification pattern. For that purpose, in an advantageous configuration of the marker, it comprises:

- a surface of a defined geometry, having a first section of a first component and at least a second section of a second component. Such sections are arranged in order to form the marker's layout which is configured to encode an unique identification pattern in binary code, each of the first and the second components being of a different binary colour.
- the first component has a reflectivity index different from the reflectivity index of the second component; and
- a heat source operable to heat the marker's surface; and wherein, the first and the second components have a different thermal conductivity coefficient;

The heterogeneous perception apparatus of the present application is adapted to be coupled to a vehicle and configured to detect the multimodal fiducial marker described in the present application that is positioned in a vehicle's target location. In an advantageous configuration of the apparatus, it comprises:

- a visual camera unit configured to collect image data in a visible light spectrum of a target location area and to estimate the marker's pose relative to a visual camera unit's coordinate system.
- a thermal camera unit configured to collect both thermal and radiometric data of the target location area and to estimate the marker's pose relative to a thermal camera unit's coordinate system.

- a 3D-LiDAR unit configured to collect range and radiometric data from the target location area and to estimate the marker's pose relative to a 3D-LiDAR unit's coordinate system.
- a processor-based device:

  - programmed to process marker's pose estimation data obtained by the visual, thermal and 3D-LiDAR units, to determine a relative pose estimation between the apparatus and the marker, and to determine the location of the marker; the relative positioning between the visual and thermal camera unit and the 3D-LiDAR unit being known; and
  - operable to transmit said location information to the Vehicle.

It is also an object of the present application, a method detecting multimodal fiducial markers using the heterogeneous perception apparatus coupled to a Vehicle. The method comprises the following steps:

i. scanning a target location area using the heterogeneous perception apparatus to obtain target location data;
ii. identifying a marker from the target location data;
iii. collecting image, thermal, radiometric and range data from the marker using the sensor units of the apparatus;
iv. estimating a marker's pose relative to the coordinate system of each sensor units of the apparatus;
v. determining the relative pose estimation between the apparatus and the marker based on the estimated poses of the marker obtained in iv., and determine the correspondent location of the marker;
vi. transmit the location information of the marker to the Vehicle.

## DESCRIPTION OF FIGURES

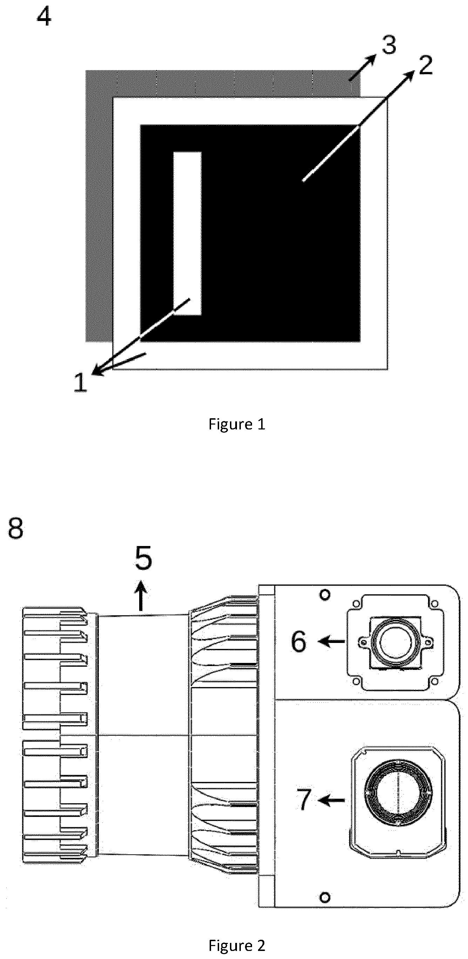

Figure 1 - representation of an embodiment of the multimodal fiducial marker of the present application, where the numerical reference signs represent:

  1 - marker's surface first section;
  2 - marker's surface second section;
  3 - heat source;
  4 - multimodal fiducial marker.

Figure 2 - representation of an embodiment of the heterogeneous perception apparatus of the multimodal system described in the present application, where the numerical reference signs represent:

  5 - 3D-LiDAR unit;
  6 - visual camera unit;
  7 - thermal camera unit;
  8 - heterogeneous perception apparatus.

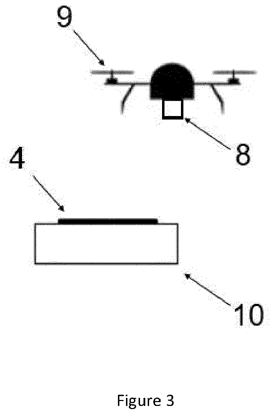

Figure 3 - an illustrative example of the multimodal system described in the present application, where the numerical reference signs represent:

  4 - multimodal fiducial marker;
  8 - heterogeneous perception apparatus;
  9 - unmanned Vehicle (air-based type);
  10 - target location.

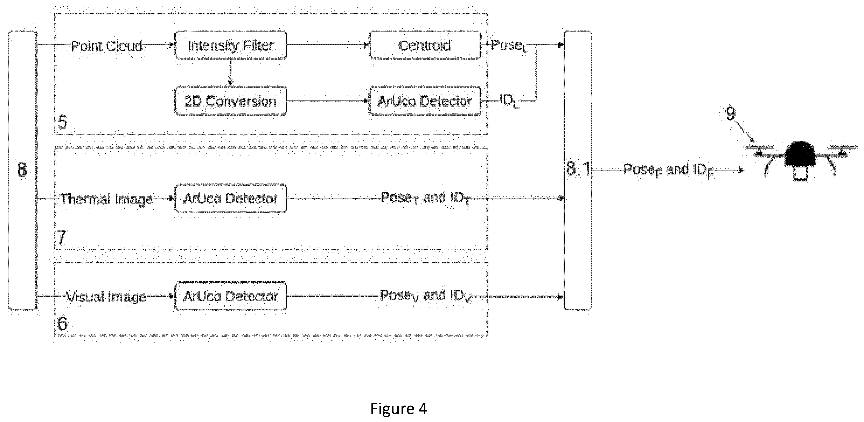

Figure 4 - a flowchart depicting the position estimation procedure executed by the heterogeneous perception apparatus, in an embodiment of the multimodal system described in the present application, where the numerical reference signs represent:

  5 - 3D-LiDAR unit;
  6 - visual camera unit;
  7 - thermal camera unit;
  8 - heterogeneous perception apparatus;
  8.1 - processor-based device;

9 - unmanned Vehicle (air-based type);
10 - target location.

## DETAILED DESCRIPTION

The more general and advantageous configurations of the present invention are described in the Summary of the invention. Such configurations are detailed below in accordance with other advantageous and/or preferred embodiments of implementation of the present invention.

In a first object of the present application, it is described a multimodal fiducial marker (4) for relative pose estimation of a vehicle. The marker (4) is operational for any type of vehicle (9), whether manned or unmanned, aquatic, ground-based or air-based type.

The marker comprises a surface of a defined geometry, that is, a geometry that is pre-defined and is recognizable by a perception apparatus and by the relative pose detection and estimation algorithms. As an example, the marker (4) has a quadrangular shape with dimensions 0.22 x 0.22 x 0.02 meters, being detectable by first extracting the edges of an image collected by the apparatus' visual camera, followed by filtering the counters to make up a polygon with four vertices. Circular shaped markers may also be used.

The marker's surface has a first section (1) of a first component and at least a second section (2) of a second component, such sections and respective components being of a different binary colour and are arranged in such a way to form a marker's specific layout that is able to encode an unique identification pattern in binary code. Additionally, the first component comprises a surface of a retroreflective type, and it has a reflectivity index different from the reflectivity index of the second component. The retroreflective feature may be conceived by providing the surface and/or material on which radiation is incident with a specific finish, in order to said reflect radiation directly back toward its source.

The marker (4) also comprises a heat source (3) operable to heat the marker's surface, and wherein the first and the second components have a different thermal conductivity coefficient.

In view of being comprised by such set of technical features, the marker (4) is an active marker that is adapted to create an unique thermal retroreflective binary identification pattern, allowing it to be detectable and localizable through the analysis of visual, thermal and point cloud data. This active marker improves the relative localization of vehicles (9) endowed with the heterogeneous perception apparatus (8) of the present application, in particular for the precise landing or docking maneuvers (depending on the type of vehicle (9)).

In an alternative embodiment of the marker (4) of the present application, its surface's geometry is a planar geometry. More particularly, the first section (1) and at least the second section (2) are arranged on the two-dimensional surface of the marker (4). Consequently, the marker (4) is adapted to create a two-dimensional thermal retroreflective binary identification pattern.

Alternatively, the marker's geometry is a spatial geometry. More particularly, the first and at least the second sections (1, 2) are arranged as a multiplicity of differently shapes. Consequently, the marker (4) is adapted to create a three-dimensional thermal retroreflective binary identification pattern.

In another alternative embodiment of the marker (4), the binary code used to encode the marker's unique identification pattern can be any one of a library of binary code, such as an ArUco or an AprilTAg or an ARTag code.

In another alternative embodiment of the marker (4), the first component is of a white colour and the second component is of a black colour. Optionally, the first component is of a blue colour and the second component is of a red colour. Other combination of colours for the first and second components are presented by way of example: green/blue, yellow/brown or light gray/dark gray.

In another embodiment of the marker (4), the first component has a reflectivity index of at least 70% and the second component is of a non-reflective type. Alternatively, the first component's retroreflective surface is a layer of a material having a reflectivity index of at least 70%, said layer being applied on top of at least a first component's material. Said first component's material may have a thermal conductivity of at least 88 $W/m^{-1}K^{-1}$. In respect of the second component, it is comprised by at least one material of a non-reflective type, said material having a maximum thermal conductivity of 0.38 $W/m^1K^{-1}$. Optionally, the first material is aluminium and the second material is cork.

Finally, in another embodiment of the marker (4), the heat source (3) is operable to heat the marker's surface to at least a temperature of 100° C. The heat source (3) may be an electric heated bed which is powered by an electrical source plug or by a battery unit.

In this way, combining all the technical characteristics, related to the binary coding, provided by components of different colours, and retro-reflectivity and thermal properties, it is possible to achieve a synergistic effect allowing this single marker (4) to be detected and localized in adverse environments, representing a compact and easy to use solution for multiple applications.

In a second object of the present application, it is described an heterogeneous perception apparatus (8) to be coupled to a vehicle (9) and configured to detect the multimodal fiducial marker (4) already described, said marker (4) being positioned in a vehicle's target location (10).

The apparatus (8) is adapted to perceive multimodal information, to allow the vehicle (9) to which it is coupled to successfully land/dock in adverse environments. Moreover, the apparatus is designed for the severe offshore environment and obtains both photometric and radiometric data, such as visual, thermal and point cloud information.

The apparatus comprises:

- a visual camera unit (6) configured to collect image data in a visible light spectrum of a target location area and to estimate the marker's pose relative to a visual camera unit's coordinate system;
- a thermal camera unit (7) configured to collect both thermal and radiometric data of the target location area and to estimate the marker's pose relative to a thermal camera unit's coordinate system;
- a 3D-LiDAR unit (5) configured to collect range and radiometric data from the target location area and to estimate the marker's pose relative to a 3D-LiDAR unit's coordinate system;
- a processor-based device (8.1):

    - programmed to process marker's pose estimation data obtained by the visual, thermal and 3D-LiDAR units (6, 7, 5), to determine a relative pose estimation between the apparatus (8) and the marker (4), and to determine the location (10) of the marker (4); the relative positioning between the visual and thermal camera unit (6, 7) and the 3D-LiDAR unit (5) being known; and
    - operable to transmit said location information to the vehicle (9).

Since the visual camera (6) collects images in the visible light spectrum and the thermal camera (7) gathers both thermal and radiometric information of the scene, it represents a more robust sensory approach that does not depend on the lighting conditions. On the other hand, the 3D LiDAR (5) directly acquires range data from the surrounding environment using laser beams, that are represented in point clouds. While the camera sensors (6) collect denser data for close range procedures, the 3D LiDAR (5) has a larger field of view and range, suitable for long range operations. Thus, the apparatus (8) not only allows to collect multimodal and complementary information about a target location, but also, being coupled to the vehicle (9), plays an important and significant role in the navigation manoeuvres, increasing situational awareness of a scenario of operation, contributing to a safer operation of the vehicle (9).

The pose estimation given by every sensor (5, 6, 7) needs to be fused to output a single and redundant localization of the detected marker. For that purpose, a weighted average is applied that ensures a short processing time and increases the computational efficiency for an embedded system, guaranteeing a real time detection and relative pose estimation. Particularly, and in another embodiment of the apparatus (8), the processor-based device (8.1) is programmed to determine the relative pose estimation between the apparatus (8) and the marker (4), $X_{Fj}$, based on the following method:

$$X_{F_j} = \frac{\sum_{\forall i}\lambda_i\, w_{i,j} X_i}{\sum_{\forall i}\lambda_i\, w_{i,j}},\, i = \{V, T, L\}, j = \{x, y, z\}$$

$$\lambda_i \in \{0, 1\},$$

$$w_{i,j} \in [0, 1],$$

$$\sum_{\forall i} w_{i,j} = 1 \forall j.$$

wherein,

$X_{Fj} = (X_{Fx}, X_{Fy}, X_{Fz}) = (x_x, x_y, x_z)$ is the position estimation of the apparatus (8) in relation to the marker (4);
$X_i = (x_i, y_i, z_i)$ is the estimation of the relative position of the marker (4) given by the visual camera unit (V), the thermal camera unit (T) and the 3D-LiDAR unit (L);
$\lambda_i$ is a Boolean variable that equals 1 when its correspondent sensor detects the marker (4) and equals 0 otherwise; and
$w_i$ is a dynamic weight, calculated according to the following expression:

$$w_{i,j} = \frac{1}{\left|\bar{\epsilon}_{i,j} + \sigma_{i,j}\right|}, i = \{V, T, L\}, j = \{x, y, z\}$$

wherein,
$\bar{\varepsilon}$ represents the mean error and $\sigma$ the standard deviation.

In a third object of the present application, it is described a method for detecting multimodal fiducial markers (4), said markers (4) being positioned in a target location (10), using a heterogeneous perception apparatus (8) coupled to a vehicle (9). The method comprising:

> i. scanning a target location area using the heterogeneous perception apparatus (8) to obtain target location data;
> ii. identifying a marker (4) from the target location data;
> iii. collecting image, thermal, radiometric and range data from the marker (4) using the sensor units (5, 6, 7) of the apparatus (8);
> iv. estimating a marker's pose relative to the coordinate system of each sensor units (5, 6, 7) of the apparatus (8);
> v. determining the relative pose estimation between the apparatus (8) and the marker (4) based on the estimated poses of the marker (4) obtained in iv., and determine the correspondent location (10) of the marker (4);
> vi. transmit the location information of the marker (4) to the vehicle (9).

The present application also describes a multimodal system comprising:

- at least one multimodal fiducial marker (4) as described in the present application; each marker (4) positioned at a target location (10); and
- at least one heterogeneous perception apparatus as described in the present application.

More particularly, the system comprises one or more vehicles (9), each vehicle (9) having coupled one heterogeneous perception apparatus, and the system being configured to operate according to the method for detecting multimodal fiducial markers described in the present application. The vehicle (9) may be of an unmanned or manned type and being of an aquatic, ground-based or air-based type. Optionally the vehicle (9) is a drone or a vessel or an automated guided vehicle.

The complementarity of the apparatus (8) and the marker (4) increases robustness and redundancy in target location detection and precise landing/docking tasks, when compared with other standard and limited systems, especially in several complex scenarios of operation, where variables such altitude, lighting condition and marker occlusions, caused by environment conditions, degrades the detection rate of the state-of-the-art systems.

Based on the technical description made, below are presented by way of example, several scenarios of application of the system, where the multimodal fiducial marker (4) and the heterogeneous perception apparatus (8) are used for relative pose estimation and manoeuvre of an unmanned or manned vehicle (9).

- Drone landing:
  The use of the marker (4) and the apparatus (8) for detecting and localizing landing areas allows a safe, accurate and reliable landing. This autonomous skill is valid for several rotating wing drones (9) to which the apparatus (8) is to be coupled, both manned and unmanned (fully autonomous and remotely operated).

- Package delivery (aerial):
  The drone (9) has the apparatus (8) coupled to its structure, enabling the detection of the marker (4) placed in a specific target location (10), landing and delivery of the package. Another possibility consists of detecting the target (10) and dropping the package in the air (with or without a parachute).

- Windfarm inspection:
  The precise landing ability that the use of the system provides enables a drone (9) with an apparatus (8) coupled to its structure, to be resident of a windfarm (both onshore and offshore), which allows more frequent and broader inspections. In this case, the marker (4) being placed on the turbine structure itself, or on a platform suitable for the drone landing.

- Docking vessels and/or ground vehicles:
  The use of the system enables accurate relative localization of the docking station (10) for both surface vessels and ground vehicles (9), such as rovers and AGVs, assisting in the docking manoeuvre.

As will be clear to one skilled in the art, the present invention should not be limited to the embodiments described herein, and a number of changes are possible which remain within the scope of the present invention.

Of course, the preferred embodiments shown above are combinable, in the different possible forms, being herein avoided the repetition all such combinations.

**Claims**

1. A multimodal fiducial marker (4) for relative pose estimation of a Vehicle (9) comprising:

   - a surface of a defined geometry, having a first section (1) of a first component and at least a second section (2) of a second component; such sections being arranged forming a marker's layout configured to encode an unique identification pattern in binary code; and each of the first and the second components being of a different binary colour;
   - the first component comprising a surface of a retroreflective type and having a reflectivity index different from a reflectivity index of the second component; and
   - a heat source (3) operable to heat the marker's surface; and wherein, the first and the second components having a different thermal conductivity coefficient;
   the marker (4) being adapted to create an unique thermal retroreflective binary identification pattern.

2. The marker (4) according to claim 1, wherein

   the surface's geometry is a planar geometry; and wherein the first section (1) and at least the second section (2) are arranged on the two-dimensional surface of the marker (4); the marker (4) being adapted to create a two-dimensional thermal retroreflective binary identification pattern; or
   the geometry is a spatial geometry; and wherein the first and at least the second sections (1, 2) are arranged as a multiplicity of differently shapes; the marker (4) being adapted to create a three-dimensional thermal retroreflective binary identification pattern.

3. The marker (4) according to any of the previous claims, wherein the binary code used to encode the marker's unique identification pattern is an ArUco or an AprilTAg or an ARTag code.

4. The marker (4) according to any of the previous claims, wherein the first component is of a white colour and the second component is of a black colour; optionally, the first component is of a blue colour and the second component is of a red colour.

5. The marker (4) according to any of the previous claims, wherein the first component has a reflectivity index of at least 70% and the second component being of a non-reflective type.

6. The marker (4) according to any of the previous claims 1 to 4 wherein the first component's retroreflective surface is a layer of a material having a reflectivity index of at least 70%, said layer being applied on top of at least a first component's material; and
   the second component being comprised by at least one material of a non-reflective type.

7. The marker (4) according to claim 6, wherein the first component's material has a thermal conductivity of at least $88\,W/m^{-1}K^{-1}$, and the second component's material has a maximum thermal conductivity of $0.38\,W/m^{1}K^{-1}$; optionally, the first material is aluminium and the second material is cork.

8. The marker (4) according to any of the previous claims, wherein the heat source (3) is operable to heat the marker's surface to at least a temperature of 100° C; preferably the heat source (3) is an electric heated bed; the heated bed being powered by an electrical source plug or a battery unit.

9. A heterogeneous perception apparatus (8) adapted to be coupled to a Vehicle (9) and configured to detect a multimodal fiducial marker (4) according to any of the claims 1 to 8; said marker (4) being positioned in target location (10); the apparatus (8) comprising:

- a visual camera unit (6) configured to collect image data in a visible light spectrum of a target location area and to estimate the marker's pose relative to a visual camera unit's coordinate system;
- a thermal camera unit (7) configured to collect both thermal and radiometric data of the target location area and to estimate the marker's pose relative to a thermal camera unit's coordinate system;
- a 3D-LiDAR unit (5) configured to collect range and radiometric data from the target location area and to estimate the marker's pose relative to a 3D-LiDAR unit's coordinate system;
- a processor-based device (8.1):

- programmed to process marker's pose estimation data obtained by the visual, thermal and 3D-LiDAR units (6, 7, 5), to determine a relative pose estimation between the apparatus (8) and the marker (4), and to determine the location (10) of the marker (4); the relative positioning between the visual and thermal camera unit (6, 7) and the 3D-LiDAR unit (5) being known; and
- operable to transmit said location information to the Vehicle (9).

**10.** Apparatus according to claim 9, wherein the processor-based device (8.1) is programmed to determine the relative pose estimation between the apparatus (8) and the marker (4), $X_{F_j}$, based on the following method:

$$X_{F_j} = \frac{\sum_{\forall i} \lambda_i \, w_{i,j} X_i}{\sum_{\forall i} \lambda_i \, w_{i,j}}, i = \{V, T, L\}, j = \{x, y, z\}$$

$$\lambda_i \in \{0,1\},$$

$$w_{i,j} \in [0,1],$$

$$\sum_{\forall i} w_{i,j} = 1 \forall j .$$

wherein,

$X_{F_j} = (X_{F_x}, X_{F_y}, X_{F_z}) = (x_x, x_y, x_z)$ is the position estimation of the apparatus (8) in relation to the marker (4);
$X_i = (x_i, y_i, z_i)$ is the estimation of the relative position of the marker (4) given by the visual camera unit (V), the thermal camera unit (T) and the 3D-LiDAR unit (L);
$\lambda_i$ is a Boolean variable that equals 1 when its correspondent sensor detects the marker (4) and equals 0 otherwise; and
$w_i$ is a dynamic weight, calculated according to the following expression:

$$w_{i,j} = \frac{1}{\left| \bar{\epsilon}_{i,j} + \sigma_{i,j} \right|}, i = \{V, T, L\}, j = \{x, y, z\}$$

wherein,
$\bar{\epsilon}$ represents the mean error and $\sigma$ the standard deviation.

**11.** Method for detecting multimodal fiducial markers (4) according to any of the claims 1 to 8, said markers (4) being positioned in a target location (10), using a heterogeneous perception apparatus (8) according to claim 9 or 10, the apparatus (8) being coupled to a Vehicle (9); the method comprising:

i. scanning a target location area using the heterogeneous perception apparatus (8) to obtain target location data;
ii. identifying a marker (4) from the target location data;
iii. collecting image, thermal, radiometric and range data from the marker (4) using the sensor units (5, 6, 7) of the apparatus (8);
iv. estimating a marker's pose relative to the coordinate system of each sensor units (5, 6, 7) of the apparatus (8);

v. determining the relative pose estimation between the apparatus (8) and the marker (4) based on the estimated poses of the marker (4) obtained in iv., and determine the correspondent location (10) of the marker (4);
vi. transmit the location information of the marker (4) to the Vehicle (9).

12. A multimodal system comprising:

- at least one multimodal fiducial marker (4) according to any of the claims 1 to 8; each marker (4) positioned at a target location (10);
- at least one heterogeneous perception apparatus (8) according to claim 9 or 10.

13. The system according to claim 12, further comprising one or more Vehicles (9); each vehicle (9) having coupled one heterogeneous perception apparatus (8); the system being configured to operate according to method of claim 11.

14. The system according to claim 13, wherein the Vehicle (9) being of an unmanned or manned type; and being of an aquatic, ground-based or air-based type; optionally the vehicle (9) is a drone or a vessel or an automated guided vehicle.

15. Use of a multimodal fiducial marker (4) of any of the claims 1 to 8 and the heterogeneous perception apparatus (8) of claims 9 or 10, for relative pose estimation and manoeuvre of an unmanned or manned vehicle (9).

Figure 1

Figure 2

Figure 3

Figure 4

13

EP 4 369 308 A1

Europäisches Patentamt
European Patent Office
Office européen des brevets

# EUROPEAN SEARCH REPORT

Application Number

EP 22 21 2945

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHEHRYAR KHATTAK ET AL: "Marker based Thermal-Inertial Localization for Aerial Robots in Obscurant Filled Environments", ARXIV.ORG, CORNELL UNIVERSITY LIBRARY, 201 OLIN LIBRARY CORNELL UNIVERSITY ITHACA, NY 14853, 2 March 2019 (2019-03-02), XP081125243, DOI: 10.1007/978-3-030-03801-4_49 | 1-8 | INV. G06V10/24 G06V20/17 G06V20/60 |
| Y | * Sections 2 and 3; | 9,11-15 | |
| A | figures 1-4 * | 10 | |
| | ----- | | |
| Y | RAEI HAMIDREZA ET AL: "Autonomous landing on moving targets using LiDAR, Camera and IMU sensor Fusion", 2022 13TH ASIAN CONTROL CONFERENCE (ASCC), ACA, 4 May 2022 (2022-05-04), pages 419-423, XP034152449, DOI: 10.23919/ASCC56756.2022.9828342 [retrieved on 2022-07-20] * Section III; Section IV-C; figures 2, 4 * | 9,11-15 | |
| | ----- | | TECHNICAL FIELDS SEARCHED (IPC) |
| Y | MARIUS BEUL ET AL: "Fast Autonomous Flight in Warehouses for Inventory Applications", ARXIV.ORG, CORNELL UNIVERSITY LIBRARY, 201 OLIN LIBRARY CORNELL UNIVERSITY ITHACA, NY 14853, 18 September 2018 (2018-09-18), XP081084321, DOI: 10.1109/LRA.2018.2849833 * Section II; figures 1, 3 * | 9,11-15 | G06V |
| | ----- | | |

The present search report has been drawn up for all claims

| Place of search | Date of completion of the search | Examiner |
|---|---|---|
| The Hague | 7 August 2023 | Craciun, Paula |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

14